Europäisches Patentamt
European Patent Office
Office européen des brevets

(19)

(11) Veröffentlichungsnummer: **0 293 705 A2**

(12) **EUROPÄISCHE PATENTANMELDUNG**

(21) Anmeldenummer: **88108196.2**

(22) Anmeldetag: **21.05.88**

(51) Int. Cl.⁴: **A01N 1/00 , A01N 59/00 , C14C 1/02**

(30) Priorität: **27.05.87 DE 3717829**

(43) Veröffentlichungstag der Anmeldung: **07.12.88 Patentblatt 88/49**

(84) Benannte Vertragsstaaten: **DE ES FR GB IT**

(71) Anmelder: **HOECHST AKTIENGESELLSCHAFT**
**Postfach 80 03 20**
**D-6230 Frankfurt am Main 80(DE)**

(72) Erfinder: **Münch, Norbert, Dr.**
**Johann-Strauss-Strasse 39**
**D-6233 Kelkheim Taunus(DE)**
Erfinder: **Fuchs, Karlheinz**
**Schillerstrasse 2**
**D-6257 Hünfelden(DE)**

# (54) Verfahren zur Kurzzeitkonservierung von Rohhäuten und Fellen.

(57) Verfahren zur kurzzeitigen Konservierung von Rohhäuten und Fellen mit einer Alkalichlorit-Lösung, die zusätzlich noch eine Verbindung der Formel 1

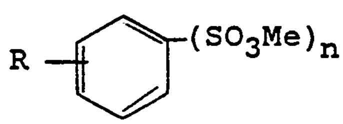

(1)

enthält, wobei R Wasserstoff oder $C_1$-$C_{12}$-Alkyl, Me Wasserstoff oder ein Alkalimetallatom und n 1 oder 2 bedeuten. Der Zusatz dieser Verbindungen verbessert aufgrund ihrer hydrotropen Wirkung das gleichmäßige Eindringen der Konservierungslösung in die Haut.

EP 0 293 705 A2

Xerox Copy Centre

# Verfahren zur Kurzzeitkonservierung von Rohhäuten und Fellen

Die Erfindung betrifft ein verbessertes Verfahren zur Haltbarmachung von Rohhäuten und Fellen, insbesondere zum Schutz gegen Mikroorganismen. Das Verfahren kann unmittelbar nach dem Abziehen der Häute zur kurzzeitigen oder auch, in Kombination mit bekannten Verfahren, zur dauerhaften Konservierung angewandt werden.

Die frisch abgezogenen tierischen Häute werden von den Lederfabriken nur in Ausnahmefällen sofort verarbeitet. Die viel Wasser enthaltenden Rohhäute gegen aber bei normaler Temperatur in Fäulnis über, da sie für Mikroorganismen ein idealer Nährboden sind. Die Folge davon sind irreparable Schäden, die sie für die Lederherstellung weitgehend ungeeignet machen.

Die frisch abgezogene Haut muß, um solche Fäulnisschäden zu vermeiden, haltbar gemacht, d.h. konserviert werden. Dazu sind verschiedene Verfahren bekannt, die eine Vernichtung oder Verminderung der auf der Haut befindlichen Bakterien und Schaffung von für Bakterien ungünstigen Lebensbedingungen bewirken sollen.

Viele der bekannten Verfahren werden sowohl für eine Kurzzeitkonservierung als auch für eine Langzeitkonservierung angewandt. Das hat zur Folge, daß diese Verfahren nur für eine kurzzeitige Haltbarmachung vielfach unwirtschaftlich sind, da der Arbeitsaufwand und der Einsatz von Chemikalien in beiden Fällen meist gleich sind.

Das älteste und am meisten angewandte Konservierungsverfahren ist die Behandlung der Rohhäute mit Salz (Natriumchlorid) bzw. Salzlake. Das Salz verringert den Wassergehalt der Haut von ca. 65 % auf 35-40 % und schafft damit eine für Bakterien ungünstige Lebensatmosphäre, so daß das Bakterienwachstum gehemmt wird.

Darüber hinaus haben konzentrierte Salzlösungen auch eine gewisse bakterizide Wirkung. Für diese Art der Konservierung wird sehr viel Salz gebraucht, je nach angestrebter Wirkung werden 30-60 Gew.-%, bezogen auf das Grüngewicht der Häute, benötigt. Dadurch wird der Salzgehalt des Abwassers der Rohhautlager und Lederfabriken in einem Maße erhöht, das den ökologischen Bestrebungen und Anforderungen nicht mehr gerecht wird.

Es ist deshalb auch bekannt, durch Zusätze von bioziden bzw. bakteriziden Mitteln die fäulnisverhindernde Wirkung des Salzes zu erhöhen unter gleichzeitiger Verminderung der Salzmenge. Als Zusätze sind die unterschiedlichsten chemischen Substanzen verwendet worden, wie z.B. Naphthalin, p-Chlor-m-kresol, Natriumsilicofluorid, zinnorganische Verbindungen, chlorierte Phenole, Pyridinderivate, quarternäre Ammoniumverbindungen, Zinksalze, Monochloressigsäure und andere mehr. Außerdem wurden als Zusätze Chemikalien verwendet, die keine ausgesprochene bakterizide Wirkung besitzen, aber die wachstumshemmende Wirkung des Salzes verstärken sollen. Hier sind Natriumsulfat, Natriumbisulfat, Alkaliperborate, Natriumsulfit, Soda und Alaun zu nennen.

Alle diese Zusätze bedingen aber immer noch eine verhältnismäßig hohe Salzmenge, deren Entsorgung - schwierig ist. Außerdem sind die im Laufe der Lederherstellung anfallenden Abfälle, speziell das Leimleder, nach einer solchen Konservierung nur mit Vorbehalt für die Verarbeitung von z.B. eiweißhaltigen Futtermitteln verwendbar.

Es hat deshalb nicht an Versuchen gefehlt, salzfreie Konservierungsverahren zu entwickeln. Nachfolgend sollen solche Verfahren aufgeführt werden, um die Vielfalt der Methoden zu veranschaulichen.

## 1. Konservierung durch Trocknen

Dieses Verfahren wird meist in tropischen Ländern angewandt. Durch zu starke Sonneneinstrahlung oder ungenügende Belüftung während des Trocknens können starke Schäden an der Haut auftreten. Da außerdem schon während des Trocknens ein bakterieller Angriff auf die Hautsubstanz stattfindet, weisen diese Häute meist bedeutende Qualitätsmängel auf.

## 2. Konservierung durch Lösungsmittelentwäserung

Für die Entwässerung der Häute wurden wassermischbare Lösungsmittel wie z.B. Dimethylsulfoxid vorgeschlagen. Diese Methoden sind apparativ aufwendig, aus toxikologischen und sicherheitstechnischen Gründen nicht unbedenklich und unwirtschaftlich.

3. Konservierung durch Behandlung der Häute mit Lösungen von Bakteriziden

Durch Überspritzen bzw. Badbehandlung mit Lösungen die 0,5-10 % von bakterizid wirkenden Substanzen enthalten, kann in vielen Fällen eine gute Konservierung erzielt werden, die aber meist nur wenige Tage anhält und wegen der relativ hohen Kosten für Bakterizide und des negativen Einflusses auf die Leimlederverwertung nicht wirtschaftlich ist.
Außerdem haben Pauckner und Mitarbeiter (Leder- und Häutemarkt 80, 5, S. 86) festgestellt, daß die aus solchen Rohhäuten hergestellten Leder im chromgegerbten Zustand meist eine graustichige Farbe und Fleckigkeit in den Faltstreifen zeigen.

4. Konservierung durch Bestrahlung

In neuerer Zeit ist auch eine Haltbarmachung von Rohhäuten durch Bestrahlung mit Ionen- bzw. Elektronenstrahlen vorgeschlagen worden. Die Aufwendigkeit eines solchen Verfahrens, dessen Wirksamkeit außerdem umstritten ist, läßt eine Verbreitung in der Praxis nicht zu.

5. Konservierung durch Kühlung

Das Lagern der Rohhäute in Kühlräumen bei Temperaturen von ca. 5 °C ist für eine kurzzeitige Konservierung der Rohhäute gut geeignet. Das Verfahren ist wegen der Anschaffung genügend großer Kühlkapazitäten allerdings äußerst kostspielig.

6. Konservierung durch Behandlung der Häute mit Natriumchlorit

In Südafrika (siehe LIRI-Report 433, Sep. 1983) wurden Versuche zur Konservierung durch Tauchen oder Übersprühen der Rohhäute mit Natriumchlorit-Lösungen durchgeführt. Die vom Institut LIRI in Grahamstown erhaltenen Ergebnisse zeigten bei einer Behandlung mit 1 % einer 30 %igen Natriumchlorit-Lösung (Prozentangabe bezogen auf Hautgewicht) bei einer Lagertemperatur von 25 °C erst nach ca. 8 Tagen erste Fäulniserscheinungen auf der Rohhaut.

Allerdings wurde bei diesen Versuchen stets Pentachlorphenol-Na mitverwendet. Die Ergebnisse sind interessant, doch erscheint die Konservierungsdauer noch nicht befriedigend und die Mitverwendung von Pentachlorphenol-Na aus toxikologischen Gründen nicht unbedenklich.

Bei ähnlichen Versuchen, die von Institut CSIRO in Melbourne durchgeführt wurden (JALCA, Vol. LXV, Nr. 2, Febr. 1970, S. 44 ff) traten beim Besprühen der Rohhäute mit einer Lagertemperatur von 25 °C nach 6 Tagen erste Fäulniserscheinungen auf, während bei einer Badkonservierung mit 2,7 % einer 30 %igen Natriumchlorit-Lösung (Prozentangabe bezogen auf Hautgewicht) ca. 10 Tage bei 25 °C bis zum Auftreten erster Bakterienschäden gelagert werden konnte. Im Fall der Sprühbehandlung ist die Zeit von 6 Tagen so kurz, daß sie für die nötige Bearbeitung bis zur Auslieferung an die Lederfabriken im Normalfall nicht ausreicht.
Bei der Badkonservierung wurde auch hier mit einem Zusatz von Bakteriziden gearbeitet, der aus den oben erwähnten Gründen nicht unbedenklich ist.

Alle bisher beschriebenen Verfahren zur Konservierung von Rohhäuten und zwar sowohl für eine Langzeit- als auch für eine Kurzzeitkonservierung, weisen Mängel auf, die die Entwicklung einer wirksamen, aber trotzdem wirtschaftlichen und toxikologisch sowie ökologisch unbedenklichen Konservierungsmethode vordringlich erscheinen lassen.

Die anhaltende Tendenz, die in den Schlachthöfen anfallenden Rohhäute nach nur kurzer Lagerung den Lederfabriken zur Verarbeitung zu geben, verlangt vor allem eine wirksame Kurzzeitkonservierung. Obwohl auch dem nur einige Tage dauernden Schutz Bedeutung zukommt, denn die Rohhäute können schon in der kurzen Zeit zwischen dem Abziehen und dem Weitertransport zur Lagerung bzw. in die Lederfabriken deutlichen Schaden erleiden, ist doch eine mittelfristige Konservierung für 2-3 Wochen wünschenswert. Dadurch soll auch für den Zeitraum des Sammelns, Transportes, Sortierens und Auslieferns an die Lederfabriken ein sicherer Schutz gewährleistet sein.

Aufgabe der Erfindung war deshalb die Verbesserung der Kurzzeitkonservierung von frischen Tierhäuten und Fellen, um bei verminderter Abwasserbelastung, Anpassung an die erhöhten toxikologischen und ökologischen Anforderungen und unter wirtschaftlich tragbaren Bedingungen eine Konservierung über 2-3

Wochen zu erreichen.

Es wurde nun gefunden, daß man dieses Ziel erreichen kann, wenn man die Rohhäute und Felle nicht mit Na-Chlorit allein, sondern zusätzlich auch mit einer hydrotropen Verbindung in Form von Alkylphenyl-mono- oder di-sulfonsäuren oder deren Salzen behandelt.

Gegenstand der Erfindung ist somit ein Verfahren insbesondere zur kurzzeitigen Konservierung von Rohhäuten und Fellen mit einer Alkalichlorit-Lösung, insbesondere mit Na-Chlorit, wobei man zusätzlich noch eine Verbindung der Formel

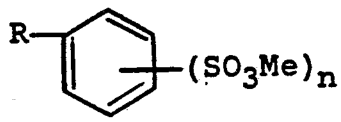

wobei R Wasserstoff oder $C_1$-$C_{12}$-Alkyl, Me Wasserstoff oder ein Alkalimetallatom und n 1 oder 2 bedeuten, in der Chlorit-Lösung einsetzt. Bevorzugt ist m-Benzol-disulfosäure-Na Salz.

Die Zusätze verbessern aufgrund ihrer hydrotropen Wirkung das gleichmäßige Eindringen der Konservierungslösung in die Haut und steigern außerdem die Penetrationstiefe. Auf diese Weise ist ein erhöhter Schutz der konservierten Haut gegen Bakterien gegeben, der sich in einer längeren Lagerzeit bis zum Fäulniseintritt äußert.

Die Zugabe von Netzmitteln und Emulgatoren wie z.B. oxethylierte Alkylphenole, Alkylphenolether, Sulfosäureester von oxethylierten Fettsäuren oder Fettalkoholen, oxethylierte Fettamine, Polyglykol-Ether, sowie von Emulgatoren, wie z.B. Salze von $C_8$-$C_{19}$ Fettsäuren mit Alkalimetallen, Ammoniak oder Aminen, Salze von Fettalkohol-Schwefelsäureestern, Schwefelsäureester von oxethylierten Fettalkoholen, Na-Salze von Sulfobernsteinsäure-Dialkylestern, Naphthalinsulfonate und Alkylnaphthalinsulfonate verstärkt die Wirkung der genannten hydrotropen Substanzen.

Des weiteren haben sich Zusätze von Polyphosphaten sowie Alkalisalzen der Nitrilotriessigsäure und Ethylendiamintetraessigsäure zur Verstärkung der Konservierungswirkung bewährt.

Die hydrotropen Substanzen der obigen Formel werden der Natriumchloritlösung in Mengen von 0,5 bis 10 %, vorzugsweise 3-5 % (die Prozentangaben beziehen sich auf die Menge der eingesetzten Natriumchloritlösung) zugesetzt. Die Konzentration der verwendeten Na-Chloritlösung beträgt 10-50 %, vorzugsweise 30 Gew.-%. Die Zusätze an Netzmitteln und/oder Emulgatoren betragen 0,1-5 %, vorzugsweise 0,5-1 %, ebenfalls bezogen auf Natriumchloritlösung der angegebenen Konzentration.

Die Durchführung der Konservierung kann sowohl im Sprühverfahren als auch in einer Badbehandlung erfolgen, beispielsweise im Faß, im Mischer oder in der Haspel. Bei der Sprühkonservierung wird auf die Narben- und Fleischseite von frisch abgezogenen Rindshäuten auf 0,1 $m^2$ 5 bis 10 ml einer wäßrigen Lösung aufgespritzt, die im Liter Flotte 150-200 g Natriumchlorit, 15-30 g hydrotrope Substanz der obigen Formel, 1-5 g Netzmittel und 0,1-0,5 g Fungizid enthält. Bei der Badkonservierung werden je nach verwendeter Apparatur die Häute in wäßriger Flotte behandelt, die 10-30 Gew.-% einer 10-50 %igen Natriumchlorit-Lösung, 0,5-5 Gew.-% hydrotropes Hilfsmittel der oben genannten Formel 0,5-3 Gew.-% Netzmittel und 0,05-0,5 Gew.-% Fungizid enthält.

Besonders bei der Sprühkonservierung zeigt sich die Überlegenheit der vorliegenden Erfindung, da die bei diesem Verfahren nur oberflächlich aufgetragene Konservierungslösung durch die erfindungsgemäßen Zusätze gleichmäßiger und schneller über die gesamte Hautoberfläche verteilt wird und tiefer in die Haut eindringt. Der gleiche Effekt wird, in noch stärkeren Maße, bei der Badkonservierung erzielt.

Die gemäß der vorliegenden Erfindung konservierten Rohhäute und Felle zeigen, in Abhängigkeit von den angewendeten Konzentrationen und der Lagertemperatur, eine Beständigkeit gegen Bakterienschäden und Fäulnis von 2-3 Wochen, eine Zeit, die im Normalfall ausreicht, um die Häute vom Schlachthof über die Sammelstelle mit Transport und Sortierung zur Lederfabrik zu bringen. Da die genannte Konservierungslösung nicht fungizid wirkt, ist für eine über zwei Wochen vorgesehene Lagerung, oder für eine Lagerung bei Temperaturen, die deutlich über 20 °C liegen, der Zusatz eines geeigneten Fundizids, z.B. Chloracetamid, ratsam.

Das Verfahren der Erfindung ist auch anwendbar für eine Langzeitkonservierung, wenn im Anschluß an die Behandlung mit den erfindungsgemäß genannten Lösungen eine Salzkonservierung durchgeführt wird. In solchen Fällen kann die Salzmenge, je nach vorgesehener Lagerdauer und Lagertemperatur, deutlich verringert und dadurch die Abwasserbelastung vermindert werden.

Es hat sich außerdem gezeigt, daß die mit den erfindungsgemäß genannten Konservierungslösungen behandelten Häute und Felle bei der Verarbeitung zu Leder weitere deutliche Vorteile bieten. Die

Entfernung der Haare in Äscher und Schwöde verläuft schneller und grundfreier, ebenso die Entfernung der Epidermis. Es werden deshalb reinere Blößen erhalten als z.B. bei einer Salzkonservierung.

Die folgenden Beispiele dienen zur näheren Erläuterung der Erfindung.

**Beispiel 1**

100 kg frisch abgezogene Rindshäute werden auf der Fleisch-und Haarseite satt besprüht mit einer Lösung, bestehend aus:

260 Gew.-Teile Wasser
700 Gew.-Teile Natriumchloritlösung 30 %
35 Gew.-Teile m-Benzol-disulfosaurem-Na
5 Gew.-Teile Nonylphenol mit 8 AeO
0,5 Gew.-Teile Chloracetamid

Die so behandelten Häute werden bei 25 °C gelagert. Nach 2 Wochen sahen die Häute sehr sauber aus, hatten einen frischen Geruch und zeigten keine Haarlässigkeit.

**Beispiel 2**

100 kg frisch abgezogene Rindshäute werden in ein Bad folgender Zusammensetzung eingelegt:

400 % Wasser
20 % Natriumchloritlösung 30 %
0,6 % m-Benzol-disulfosaures-Na
0,4 % Natriumtripolyphosphat
1,5 % Na-Laurylsulfat
0,05 % Chloracetamid

Die Prozentangaben beziehen sich auf das Rohhautgewicht. Die Häute werden im Bad belassen. Bei einer Lagertemperatur von 25 °C traten auch nach 4 Wochen noch keine Zeichen von Haarlässigkeit oder Fäulnis auf.

**Beispiel 3**

100 kg frisch abgezogene Rindshäute werden im Mischer mit

30 % Wasser
3 % Natriumchloritlösung 30%
0,3 % m-Benzol-disulfosaurem-Na
0,1 % Dodecylbenzol-Sulfosaurem-Na
0,05 % Chloracetamid

2 Stunden bei 2-4 UpM gewalkt. Anschließend werden die Häute bei 25 °C gelagert. Nach 3-wöchiger Lagerung waren noch keine Schäden zu erkennen.

## Ansprüche

1. Verfahren zur kurzzeitigen Konservierung von Rohhäuten und Fellen mit einer Alkalichlorit-Lösung, dadurch gekennzeichnet, daß man die Rohhäute und Felle mit einer solchen Alkalichlorit-Lösung behandelt, die zusätzlich noch eine Verbindung der Formel 1

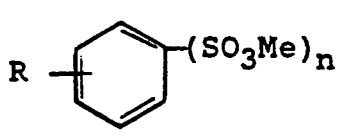

(1)

enthält, wobei R Wasserstoff oder $C_1$-$C_{12}$-Alkyl, Me Wasserstoff oder ein Alkalimetallatom und n 1 oder 2 bedeuten.

2. Verfahren nach Anspruch 1, dadurch gekennzeichnet, daß man die Rohhäute und Felle mit einer Alkalichlorid-Lösung behandelt, die 1,2-Benzol-disulfosäure-Natriumsalz enthält.

3. Verfahren nach Anspruch 1, dadurch gekennzeichnet, daß man die Rohhäute und Felle mit einer 10-50 Gew.-%igen Lösung von Alkalichlorit behandelt, die zusätzlich 0,5-10 Gew.-%, bezogen auf die Alkalichlorit-Lösung, einer Verbindung der Formel 1 enthält.

4. Verfahren nach Anspruch 1, dadurch gekennzeichnet, daß man die Rohhäute und Felle mit einer 10-50 Gew.-%igen Lösung von Alkalichlorit behandelt, die zusätzlich 0,1-5, vorzugsweise 0,5-1 Gew.-% eines Netz- und Emulgiermittels enthalten.

5. Verfahren nach Anspruch 1, dadurch gekennzeichnet, daß man zusätzlich noch ein Fungizid mitverwendet.

6. Verfahren nach Anspruch 1, dadurch gekennzeichnet, daß man die Rohhäute oder Felle durch Sprühen oder durch Eintauchen behandelt.

7. Verfahren nach Anspruch 1, dadurch gekennzeichnet, daß man die Rohhäute ode Felle zusätzlich salzt.